Europäisches Patentamt

European Patent Office

Office européen des brevets

(11) Publication number: **0 381 163**
**A1**

## (12) EUROPEAN PATENT APPLICATION

(21) Application number: **90101845.7**

(51) Int. Cl.5: **F02B 25/14**

(22) Date of filing: **30.01.90**

(30) Priority: **01.02.89 JP 20821/89**

(43) Date of publication of application:
**08.08.90 Bulletin 90/32**

(84) Designated Contracting States:
**DE FR GB IT**

(71) Applicant: **YAMAHA HATSUDOKI KABUSHIKI KAISHA**
**2500 Shingai**
**Iwata-shi Shizuoka-ken, 438(JP)**

(72) Inventor: **Masuda, Tatsuyuki**
**990-A201 Kamiokada**
**Iwata-shi, Shizuoka-ken(JP)**
Inventor: **Ozawa, Toshikazu**
**2-12-209 Hagioka**
**Hamamatsu-shi, Shizuoka-ken(JP)**

(74) Representative: **Patentanwälte Grünecker, Kinkeldey, Stockmair & Partner**
**Maximilianstrasse 58**
**D-8000 München 22(DE)**

(54) 2-Cycle engine.

(57) The invention refers to a 2-cycle engine (1) having a main exhaust passage (14) and a sub exhaust passage (15) for each cylinder (3) both opening into the cylinder (3) with their inlet portion whereas the sub exhaust passage (15) being located above the main exhaust passage (14) and communicated with the latter and, moreover, being provided with an opening valve (17) for opening and closing the sub exhaust passage (15) depending on engine load. At least the upper wall of the main exhaust passage (14) is directly increasing upwards in the downstream direction of said main exhaust passage (14) and the sub exhaust passage (15) is formed straight at a generally right angle to the centre axis of the cylinder (3) resulting in a lowered exhaust gas flow resistance, facilitated manufacturing of the sub exhaust passage and improved engine output.

Figur 1

# 2-CYCLE ENGINE

The invention relates to a 2-cycle engine having a main exhaust passage and a sub exhaust passage for each cylinder, both passages opening into the cylinder, and, moreover, the sub exhaust passage being controlled by an operating exhaust valve for opening and closing said sub exhaust passage.

In this kind of 2-cycle engine, the total opening area of the exhaust passage can be varied by opening and closing the sub exhaust passage through the operating valve. For example, it is well known that some 2-cycle Diesel engine is provided with a compression ratio varying mechanism for varying the compression ratio by opening and closing the operating valve to improve engine startability and to restrain excessive rise of the cylinder inner pressure during high load running (See, e.g., Japanese Provisional Patent Publication S63-65121).

The above-mentioned compression ratio varying mechanism is constructed with a sub exhaust passage (bypass passage) formed above and communicated with the main exhaust passage and provided with an operating valve for opening and closing this sub exhaust passage. The compression ratio is heightened by closing the sub exhaust passage with the operating valve during starting and low load running.

However, the prior art compression ratio varying mechanism has a problem in that, since the sub exhaust passage is curved, the exhaust gas suffers a greater flow resistance which reduces engine output.

Moreover, machining of such a cylinder block containing crooked sub exhaust passage is more complicated.

This invention has been made taking the above problem into consideration to provide a 2-cycle engine having a smaller exhaust gas flow resistance and an unreduced output.

Accordingly, it is an object of the present invention to improve a 2-cycle engine as indicated above to exhibit a smaller exhaust gas flow resistance and an improved engine performance. Moreover, manufacturing of the cylinder block of such a 2-cycle engine should be facilitated.

Accordingly, in order to achieve the afore mentioned objectives, the present invention provides a 2-cycle engine having a main exhaust passage and a sub exhaust passage for each cylinder of a cylinder block, both passages opening into the cylinder with the sub exhaust passage being located above and communicated with the main exhaust passage and, moreover, comprising an operating exhaust valve in said sub exhaust passage in order to open and close said sub exhaust passage, with the improvement that the main exhaust passage provides an increased cross-section in downstream direction thereof comprising at least an upwardly extending upper wall section at the downstream side exhaust port of the main exhaust passage, adapted to join with the sub exhaust passage which is designated to extend straight and substantially perpendicularly to the centre axis of the cylinder.

Accordingly since the sub exhaust passage is formed straight at a generally right angle to the centre line of the cylinder in its side view (i.e. in the direction of the crankshaft axis), the flow resistance the exhaust gas flowing through this sub exhaust passage surface can be reduced and the engine output can be improved. Moreover, it is easier to machine the sub exhaust port as it is designed to extend straight and perpendicular to the centre axis of the cylinder.

Preferably, the sub exhaust passage extends straightly tapered to its outlet port opening into the main exhaust passage substantially at an upper wall section thereof. It is, moreover, acceptable to manufacture the sub exhaust port by casting either.

According to a preferred embodiment of the present invention to the cylinder body of the engine includes three cylinders formed in a parallel with the downstream outlet ports of the main and sub exhaust passages being offset in the crankshaft direction with respect to the associated cylinders and the main and sub exhaust passages extend inclined with respect to the crankshaft axis.

According to yet another preferred embodiment of the present invention the operating valve of each sub exhaust passage is designed to be exposed to the main exhaust passage, respectively.

In the following preferred embodiments of the present invention are described in detail in conjunction with the drawings attached. Therein discloses

Fig. 1 a vertical cross-sectional view of a 2-cycle Diesel engine according to an embodiment of the present invention,

Fig. 2 an enlarged cross-sectional view of a portion around the exhaust passages of a cylinder as shown in Fig. 1,

Fig. 3 a view similar to those of Fig.3 disclosing the exhaust operating valve to be exposed to the main exhaust passage of the associated cylinder,

Fig. 4 a cross-sectional view along the line III-III of Fig. 1 for one cylinder of the cylinder block only.

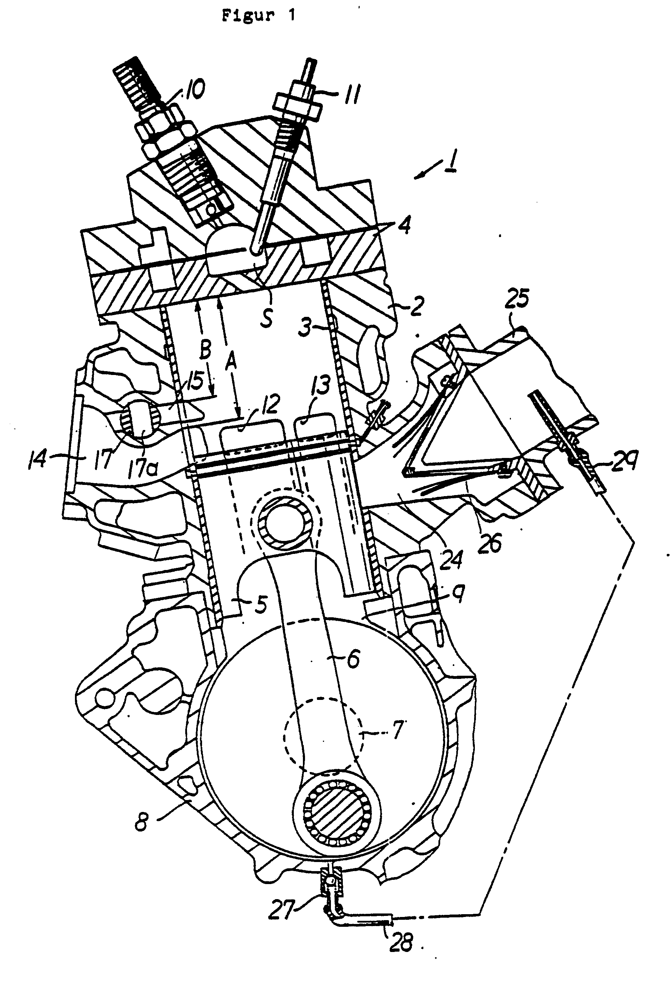

The engine 1 shown in Fig. 1 is a 3-cylinder Diesel engine comprising a cylinder body 2 having three cylinders 3 formed in parallel and a cylinder head 4 covering over the cylinder body 2. Within each cylinder 3 is fitted vertically slidable a piston 5 which is connected to the crankshaft 7 through a connecting rod 6. The crankshaft 7 extends vertically of the paper surface in Fig. 1 (in the direction of the row of the cylinders 3) and is rotatably accomodated with the crank chamber 9 of the crank case 8.

The cylinder head 4 has a swirl-chamber type sub combustion S formed for each cylinder 3, into which chamber S are faced the tips of the fuel injection valve 10 and the glow plug 11.

The cylinder body 2 has scavenging passages 12 and 13 and main and sub exhaust passages 14 and 15, respectively, formed for each cylinder, one end of each of these passages being opened into the cylinder 3, and the other end of each of scavenging passages being opened into the crank chamber 9.

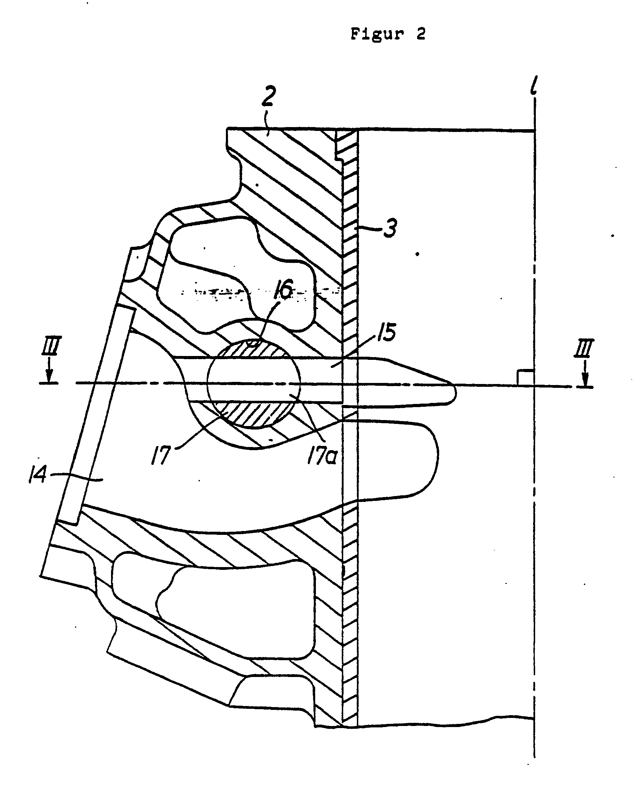

Hereupon, the upper wall of the main exhaust passage 14 is directed, as shown in detail in Fig. 2, the more upward in the more downstream portion (in the nearer portion to its exit), and the sub exhaust passage 15 is formed above the main exhaust passage 14. The inlets of these passages 14 and 15 are opened into the cylinder 3, the outlet of the main exhaust passage 15 has an exhaust pipe (not shown) connected thereto, and the outlet of the sub exhaust passage 15 is opened into the main exhaust passage 14.

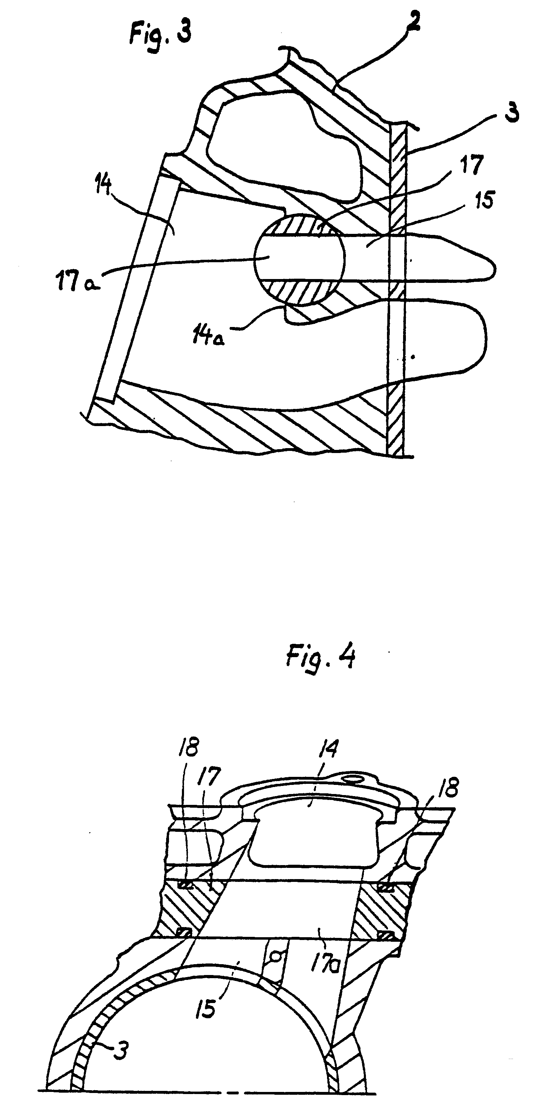

In this embodiment, the sub exhaust passage 15 is formed, through machining by a cutter, straight and at a right angle to the centreline 1 of the cylinder 3 in its side view as shown in Fig. 2 and straightly tapered toward its outlet (the narrower the more downstream) in its plan view as shown in Fig. 3

Thus, with the sub exhaust passage extending straight along an axis coinciding with a plane perpendicularly to the centre axis of the cylinder the inlet of the sub exhaust passage opening into the cylinder preferably defines a rectangular opening, easy to machine from outside through the main exhaust passage leaving an expanded mouth portion at the outlet thereof.

The cylinder body 2 has a cylindrical through hole 16 bored through the middle of each sub exhaust passage 15 in the crankshaft direction (i.e., in the direction of the row of cylinders 3) for rotatable receiving a cylindrical operating valve 17 for each cylinder 3, the gaps between the outer peripheries of both ends of each valve 17 and the inner periphery of the cylindrical hole 16 being hermetically sealed through O-rings 18.

The operating valve 17 has a valve hole 17a for opening and closing the sub exhaust passage 15 through the rotation of same. The three operating valves 17, one for each of the three cylinders 3 are commonly driven by a drive means to allow the operating valves 17 to close or open in response to the motor output representing data, such as throttle opening degree and engine speed.

The above-mentioned sub exhaust passage 15, operating valve 17, and drive means constitute a compression ratio varying mechanism.

As shown in Fig. 1, the cylinder body 2 has an intake passage 24 for each cylinder 3 formed at one side thereof, one end of which passage 24 is opened into the crank chamber 9, the other end of which passage 24 has an intake pipe 25 connected thereto and within which is provided a reed valve 26 for permitting the intake air to flow only toward the crank chamber.

The bottom portion of the crank chamber 9 is connected to the oil injection nozzle 29 mounted through the intake pipe 25 wall upstream of the reed valve 26 through a check valve 27 and a tube 28 to supply the oil accumulated in the bottom portion of the crank chamber 9 to the reed valve 26 through the oil spray nozzle 29 to reduce seating noises of the reed valve 26.

As shown in Fig. 3 which shows another embodiment for disposing the operating valve similar to the view of Fig. 2 the main exhaust passage 14 includes an upwardly extending upper wall section 14a to form a step of immediate change of the longitudinal cross-section of the main exhaust passage 14 to expose the operating valve 17 to said main exhaust port which can assist obtaining a low flow resistance to be provided for the exhaust gas flowing through the sub exhaust passage 15.

Next is described the action of this 2-cycle Diesel engine.

While the engine is being started or running under low load, the operating valves 17 are under the closed condition as shown in Fig.1 and the sub exhaust passages are kept closed by these operating valves 17. When the piston 5 ascends within the cylinder 3 under such a condition, a vacuum is produced in the crank chamber 9, which introduces the intake air into the crank chamber 9 through the intake pipe 25 and the reed valve 26. This intake air is primarily compressed by the piston 5 descending during the explosion/scavenging stroke and, when the piston 5 opens the main exhaust passage 14 and then scavenging 12 and 13, this primarily compressed intake air flows into the cylinder 3 through the scavenging passages 12 and 13 to push out the exhaust gas produced by fuel combustion within the cylinder 3 into the main exhaust passage 14. Then, when the piston 5 closes the scavenging passages 12 and 13 and the main exhaust passage 14, the intake air within the cylinder 3 is compressed by the piston 5, wherein the compressin stroke, given by A in Fig. 1, is longer which heightens the compression ratio of the engine 1.

When the piston 5 approaches its top dead center, the temperature and the pressure of the intake air within the cylinder 3 are heightened, and an appropriate amount of fuel is injected into the sub combustion chamber S throught the fuel injection valve 10, which fuel is ignited and combusted by the high-temperature high-pressure intake air.

Receiving the high pressure of the high-temperature and high-pressure exhaust gas produced by this combustion on its head, the piston 5 begins to descend, and, when the main exhaust passage 14 and scavenging passages 12 and 13 are opened by this descending piston 5, the intake air primarily compressed in the crank chamber 9 flows into the cylinder 3 through the scavenging passages 12 and 13 as mentioned above, and the similar processes as mentioned above are repeated thereafter.

Since the compression ratio of the engine 1 is kept higher while the engine 1 is being started or running under low load by closing the sub exhaust passages 15 with the operating valves 17 as mentioned above, the startability of the engine 1 is improved and HC and CO concentrations in the exhaust gas during low load running are reduced.

On the other hand, under the engine running conditions other than those mentioned above, a controller delivers an ON signal based on the throttle opening data and the speed data of the engine 1 inputted thereto to the step motor 21 for rotating the operating valves 17 integrally to open the sub exhaust passages 15 as shown in Figs.2 and 3.

Under such a condition with the sub exhaust passages 15 opened, since the compression stroke of the piston 5, given by B in Fig. 1, becomes shorts (B<A), the compression ratio of this engine 1 is suppressed lower, and the fuel consumption is improved and blue smoke in the exhaust gas is reduced during high speed and/or high load running.

While the piston 5 is descending during the explosion/scavenging stroke, first is opened the sub exhaust passage 15 and the exhaust gas in the cylinder 3 first flows through this sub exhaust passage 15 then into the main exhaust passage 14, and then is discharged into the atmosphere through an exhaust pipe and a muffler (both not shown), and

when the main exhaust passage 14 is also opened finally, the exhaust gas is discharged through both main and sub exhaust passages 14 and 15. Hereupon, since the sub exhaust passage 15 is formed straight and at a right angle to the centre line 1 of the cylinder 3 as described above, the flow resistance acting on the exhaust gas flowing through the sub exhaust passages 15 is reduced, the exhaust gas can flow smoothly into the main exhaust passage 14 through the sub exhaust passage 15, and therefore the output of the engine 1 can be improved, while the sub exhaust passage 15 can be easily machined. Particularly, since the downstream end of the sub exhaust passage 15 is opened into the main exhaust passage 14, the sub exhaust passage 15 can be machined yet more easily.

Although the above description is specifically for the 2-cycle Diesel engine, this invention is of course applicable to the 2-cycle gasoline engine. Although only the upper wall of the main exhaust passage is directed the more upward in the more downstream portion, the main exhaust passage itself may be directed as a whole the more upward in the more downstream portion. Further, the sub exhaust passage may be formed through casting.

As clarified by the above description, since the 2-cycle engine, having a main exhaust passage and a sub exhaust passage for each cylinder both opened into the cylinder, the sub exhaust passage being located above and communicated with the main exhaust passage and being provided with an operating valve for opening and closing the sub exhaust passage, is characterized, according to this invention, in that at least the upper wall of the main exhaust passage is directed the more upward in the more downstream portion, and the sub exhaust passage is formed straight at a generally right angle to the center line of the cylinder in its side view, the exhaust gas flow resistance can be reduced and the engine output can be improved.

## Claims

1. A 2-cycle engine having a main exhaust passage and a sub exhaust passage for each cylinder of a cylinder block both opened into the cylinder, said sub exhaust passage being located above and communicated with said main exhaust passage and being provided with an operating valve for opening and closing thereof, **characterized in that,** the main exhaust passage (14) provides an increased cross-section in downstream direction thereof with at least an upwardly extending upper wall section adapted to join with the sub exhaust passage (15) which is designed to extend straight and substantially perpendicularly to the centre axis of the cylinder (3).

2. A 2-cycle engine **characterized in that,** the sub exhaust passage (14) extends straightly tapered towards its outlet opening into the main exhaust passage (15) generally at an upper wall section thereof.

3. A 2-cycle engine as claimed in claim 1,

characterized in that, the cylinder body (2) includes three cylinders (3) formed in parallel to each other.

4. A 2-cycle engine as claimed in claim 1, characterized in that, the downstream outlet ports of the main and sub exhaust passages (14,15) being offset in the direction of the crankshaft from the associated cylinder (3) and the main and sub exhaust passages (14,15) extend inclined with respect to the crankshaft axis.

5. A 2-cycle engine as claimed in claim 1, characterized in that, the operating valve (17) is exposed to the main exhaust passage (14) establishing the junction of the sub exhaust passage (15) opening into the main exhaust passage (14).

6. A 2-cycle engine as claimed in claim 1, characterized in that, the sub exhaust passage (14) is made by casting.

Figur 1

Figur 2

Fig. 3

Fig. 4

## DOCUMENTS CONSIDERED TO BE RELEVANT

EP 90101845.7

| Category | Citation of document with indication, where appropriate, of relevant passages | Relevant to claim | CLASSIFICATION OF THE APPLICATION (Int Cl⁴) |
|---|---|---|---|
| X | US - A - 2 720 872 (MOTOAKI YOKOI) * Fig. 1-7 * | 1,4,5 | F 02 B 25/14 |
| X | DE - C - 282 930 (FRIED.KRUPP AG) * Totality * | 1,5 | |
| X | DE - C - 363 520 (STILL) * Totality * | 1,5 | |
| A | EP - A2 - 0 145 479 (KAWASAKI) * Totality, especially fig. 1 * | 1 | |
| A | EP - A2 - 0 141 650 (KAWASAKI) * Totality, especially fig. 1a,1b * | 1 | |

TECHNICAL FIELDS SEARCHED (Int Cl⁴)

F 02 B 25/00
F 02 B 27/00
F 02 B 33/00
F 02 D 9/00
F 02 D 13/00
F 02 D 39/00
F 02 D 15/00

The present search report has been drawn up for all claims

| Place of search | Date of completion of the search | Examiner |
|---|---|---|
| VIENNA | 09-05-1990 | PIPPAN |